# EUROPEAN PATENT APPLICATION

(11) **EP 2 747 478 A1**
(43) Date of publication of application: **25.06.2014**
(21) Application number: 12823805.2
(22) Date of filing: 14.08.2012
(51) Int. Cl.: H04W 28/16, H04W 16/32, H04W 24/10, H04W 72/08, H04J 11/00

(54) **WIRELESS COMMUNICATION SYSTEM, WIRELESS BASE STATION DEVICE, USER TERMINAL, AND WIRELESS COMMUNICATION METHOD**

(30) Priority: 15.08.2011 JP 2011177607
(71) Applicant: NTT DOCOMO, INC., Chiyoda-ku Tokyo 100-6150 (JP)
(72) Inventor: NAGATA, Satoshi, Tokyo 100-6150 (JP); ABE, Tetsushi, Tokyo 100-6150 (JP); MIKI, Nobuhiko, Tokyo 100-6150 (JP); SHE, Xiaoming, Beijing 100190 (CN)
(74) Representative: HOFFMANN EITLE
(86) International application number: PCT/JP2012/070697
(87) International publication number: WO 2013/024854

(57) **Abstract**

The present invention is designed to reduce the influence of performance deterioration due to interference when CoMP transmission is adopted in a heterogeneous network. A user terminal measures the first reception quality in the first transmission period when a macro base station performs no transmission or reduces transmission power, and second reception quality in a second transmission period when the macro base station and low power nodes perform transmission, and transmits an uplink signal including the first reception quality and the second reception quality, to the macro base station, and the macro base station receives the uplink signal including the first reception quality and the second reception quality, and, when performing the coordinated multiple-point transmission, allocates radio resources for a user terminal that is located on an edge of a coordinated area in the first transmission period, based on the first reception quality and the second reception quality.

## Description

### Technical Field

The present invention relates to a radio communication system, a radio base station apparatus, a user terminal and a radio communication method in a next generation mobile communication system.

### Background Art

In a UMTS (Universal Mobile Telecommunications System) network, system features that are based on W-CDMA (Wideband Code Division Multiple Access) are maximized by adopting HSDPA (High Speed Downlink Packet Access) and HSUPA (High Speed Uplink Packet Access) for the purposes of improving the spectral efficiency and improving the data rate. For this UMTS network, long-term evolution (LTE) has been under study for the purposes of further increasing high-speed data rates, providing low delay and so on (non-patent literature 1).

In the third-generation system, it is possible to achieve a transmission rate of maximum approximately 2 Mbps on the downlink by using a fixed band of approximately 5 MHz. Meanwhile, in the system of the LTE scheme, it is possible to achieve a transmission rate of about maximum 300 Mbps on the downlink and about 75 Mbps on the uplink by using a variable band which ranges from 1.4 MHz to 20 MHz. Furthermore, in the UMTS network, successor systems of LTE have been under study as well (for example, LTE-Advanced (LTE-A) system) for the purpose of achieving further broadbandization and higher speed.

As a promising technique for further improving the system performance of the Rel-8 LTE system, there is inter-cell orthogonalization. In the LTE systems of Rel-10 (LTE-A system) or later versions, intra-cell orthogonalization is made possible by orthogonal multiple access on both the uplink and the downlink. That is to say, on the downlink, orthogonalization is provided between user terminals (UEs: User Equipment) in the frequency domain. However, between cells, like in W-CDMA, interference randomization by one-cell frequency reuse is fundamental.

In the 3GPP (3rd Generation Partnership Project), coordinated multiple-point transmission (CoMP) is under study as a technique for realizing inter-cell orthogonalization. In CoMP transmission, a plurality of cells coordinate and perform signal processing for transmission for one user terminal UE or for a plurality of user terminal UEs. To be more specific, as for downlink transmission, simultaneous transmission of a plurality of cells, coordinated scheduling/beam forming, which adopt precoding, and so on, are under study.

### Citation List

### Non-Patent Literature

Non-Patent Literature 1: 3GPP, TR25.912 (V7.1.0), "Feasibility Study for Evolved UTRA and UTRAN," Sept. 2006

### Summary of the Invention

### Technical Problem

Meanwhile, in the LTE-A system, a technique to improve performance in a heterogeneous network (HetNet) is under study. This heterogeneous network refers to an overlay-type network which uses, in addition to a conventional macro base station (radio base station apparatus), base stations having varying transmission power and having various forms, such as a pico base station, a femto base station, an RRH (Remote Radio Head) base station and so on. Given the significance of a local area network, this heterogeneous network is expected as a technique to realize further increase of system capacity.

In the 3GPP, application of above CoMP transmission, which is an inter-cell orthogonalization technique, to a heterogeneous network is under study. In CoMP transmission, whether to apply CoMP in coordinated areas is determined takes into account only the inside of each coordinated area, and the influence of interference against the outside of the coordinated areas is not taken into account. Consequently, when an attempt is made to adopt CoMP transmission in a heterogeneous network, the influence of performance deterioration due to interference from a macro base station of high transmission power is expected to be significant.

The present invention has been made in view of the above, and it is therefore an object of the present invention to provide a radio communication system, a radio base station apparatus, a user terminal and a radio communication method which can reduce the influence of performance deterioration due to interference when CoMP transmission is adopted in a heterogeneous network.

### Solution to Problem

A radio communication system according to the present invention is a radio communication system where, in a network in which a first cell having a predetermined cell radius and a second cell having a smaller cell radius than the cell radius of the first cell are overlaid, a plurality of coordinated areas, in which a first radio base station apparatus of the first cell and a second radio base station apparatus of the second cell perform coordinated multiple-point transmission, exist in the first cell, and this radio communication system includes: a user terminal having: a measurement section that measures first reception quality in a first transmission period when the first radio base station apparatus performs no transmission or reduces transmission power, and second reception quality in a second transmission period when the first radio base station apparatus and the second radio base station apparatus perform transmission; and a transmission section that transmits an uplink signal including the first reception quality and the second reception quality, to the first radio base station apparatus; and a radio base station apparatus having: a receiving section that receives the uplink signal including the first reception quality and the second reception quality; and an allocation section that, when performing the coordinated multiple-point transmission, allocates radio resources for a user terminal that is located on an edge of a coordinated area in the first transmission period, based on the first reception quality and the second reception quality.

A radio base station apparatus according to the present invention is a radio base station apparatus in a radio communication system where, in a network in which a first cell having a predetermined cell radius and a second cell having a smaller cell radius than the cell radius of the first cell are overlaid, a plurality of coordinated areas, in which a first radio base station apparatus of the first cell and a second radio base station apparatus of the second cell perform coordinated multiple-point transmission, exist in the first cell, and this radio base station apparatus has: a receiving section that receives an uplink signal including first reception quality in a first transmission period when the first radio base station apparatus performs no transmission or reduces transmission power, and second reception quality in a second transmission period when the first radio base station apparatus and the second radio base station apparatus perform transmission; and an allocation section that, when performing the coordinated multiple-point transmission, allocates radio resources for a user terminal that is located on an edge of a coordinated area in the first transmission period, based on the first reception quality and the second reception quality.

A user terminal according to the present invention is a user terminal in a radio communication system where, in a network in which a first cell having a predetermined cell radius and a second cell having a smaller cell radius than the cell radius of the first cell are overlaid, a plurality of coordinated areas, in which a first radio base station apparatus of the first cell and a second radio base station apparatus of the second cell perform coordinated multiple-point transmission, exist in the first cell, and this user terminal has: a measurement section that measures first reception quality in a first transmission period when the first radio base station apparatus performs no transmission or reduces transmission power, and second reception quality in a second transmission period when the first radio base station apparatus and the second radio base station apparatus perform transmission; and a transmission section that transmits an uplink signal including the first reception quality and the second reception quality, to the first radio base station apparatus.

A radio communication method according to the present invention is a radio communication method in a radio communication system where, in a network in which a first cell having a predetermined cell radius and a second cell having a smaller cell radius than the cell radius of the first cell are overlaid, a plurality of coordinated areas, in which a first radio base station apparatus of the first cell and a second radio base station apparatus of the second cell perform coordinated multiple-point transmission, exist in the first cell, and this radio communication method includes the steps of: at a user terminal: measuring first reception quality in a first transmission period when the first radio base station apparatus performs no transmission or reduces transmission power, and second reception quality in a second transmission period when the first radio base station apparatus and the second radio base station apparatus perform transmission; and transmitting an uplink signal including the first reception quality and the second reception quality, to the first radio base station apparatus; and at the first radio base station apparatus: receiving the uplink signal including the first reception quality and the second reception quality; and when performing the coordinated multiple-point transmission, allocating radio resources for a user terminal that is located on an edge of a coordinated area in the first transmission period, based on the first reception quality and the second reception quality.

### Technical Advantage of the Invention

According to the present invention, when CoMP transmission is adopted in a heterogeneous network, it is possible to reduce the influence of performance deterioration due to interference, and therefore improve throughput.

### Brief Description of the Drawings

FIG. 1 is a diagram for explaining a heterogeneous network;
FIG. 2 provides diagrams for explaining coordinated multiple point transmission;
FIG. 3 provides diagrams for explaining configurations of a radio communication system that executes coordinated multiple-point transmission;
FIG. 4 is a diagram for explaining a configuration of a radio communication system according to an embodiment;
FIG. 5 provides diagrams for explaining inter-cell interference coordination;
FIG. 6 is a diagram for explaining a radio communication method according to an embodiment;
FIG. 7 is a diagram for explaining a system configuration of a radio communication system;
FIG. 8 is a diagram for explaining an overall configuration of a radio base station apparatus;
FIG. 9 is a diagram for explaining an overall configuration of a user terminal;
FIG. 10 is a functional block diagram corresponding to a baseband processing section of a radio base station apparatus; and
FIG. 11 is a functional block diagram corresponding to a baseband processing section of a user terminal.

### Description of Embodiments

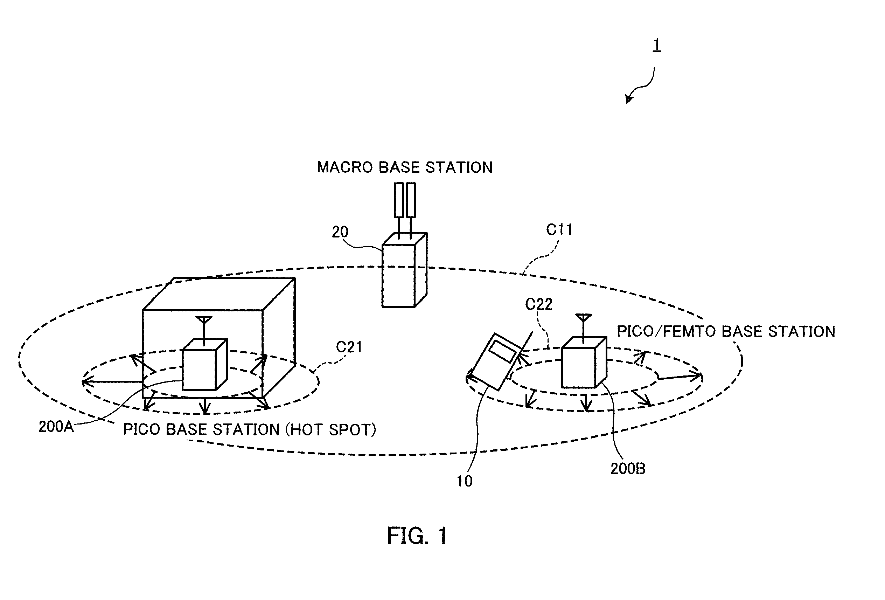

Now, an embodiment of the present invention will be described below in detail with reference to the accompanying drawings. FIG. 1 is a diagram for explaining an example of a heterogeneous network. The radio communication system shown in FIG. 1 constitutes a heterogeneous network, and employs a configuration in which cell C11 having a predetermined cell radius and cells C21 and C22, each having a smaller cell radius than the cell radius of cell C11, are overlaid.

The radio communication system 1 has a radio base station apparatus (macro base station) 20, which forms a cell (macro cell) of a relatively large cell radius, and radio base station apparatuses (pico base stations) 200A and 200B, which each form a cell (pico cell or femto cell) of a relatively small cell radius. The pico base stations 200A and 200B may be provided indoors and so on, and form what is commonly referred to as "hotspots." Also, a user terminal (UE) 10 communicates via radio with the macro base station 20 and/or the pico base stations 200A and 200B.

In a heterogeneous network, application of cell range expansion (CRE), which increases the radius of cells such as pico cells by biasing reception quality (received power) upon selecting the cell of a user terminal 10, is defined. By this means, when a macro cell, a pico cell and so on are overlaid, it becomes possible to load more traffic off from the macro cell to the pico cell. Also, by this means, it becomes possible to select optimal cells on the uplink. Although, in FIG. 1, the user terminal 10 connects with the macro base station 20, given that the cells are expanded by CRE, it is possible to allow the pico base station to accommodate the user terminal 10.

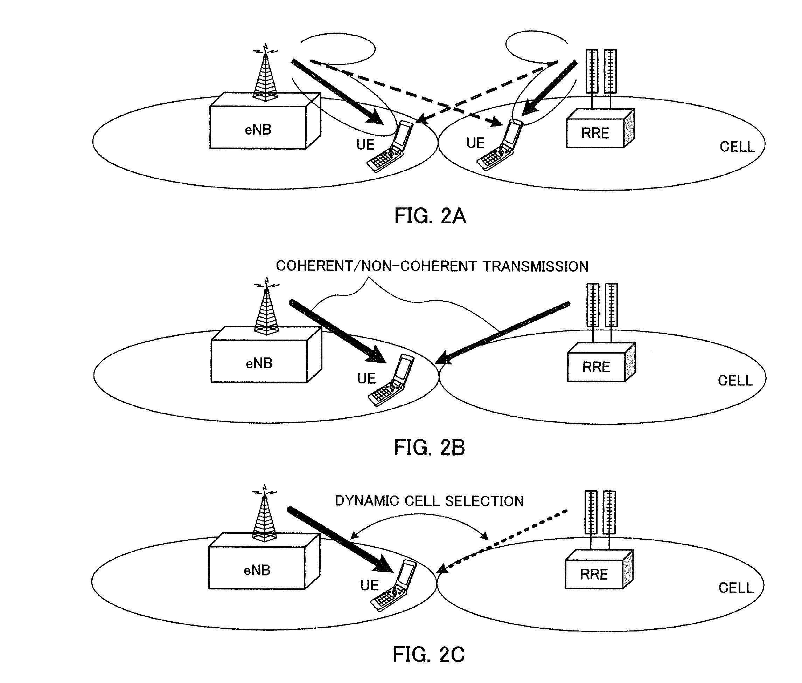

Next, downlink CoMP transmission will be described. The types of downlink CoMP transmission include coordinated scheduling/coordinated beamforming (CS/CB), and joint processing (JP). As shown in FIG. 2A, CS/CB is a method of transmitting from only one cell to one UE, and is a method of allocating radio resources in the frequency/space domain taking into account interference from other cells and interference against other cells. On the other hand, JP refers to simultaneous transmission by a plurality of cells adopting precoding, and includes joint transmission (JT) to transmit from a plurality of cells to one UE as shown in FIG. 2B, and dynamic cell selection (DCS) to select cells dynamically as shown in FIG. 2C.

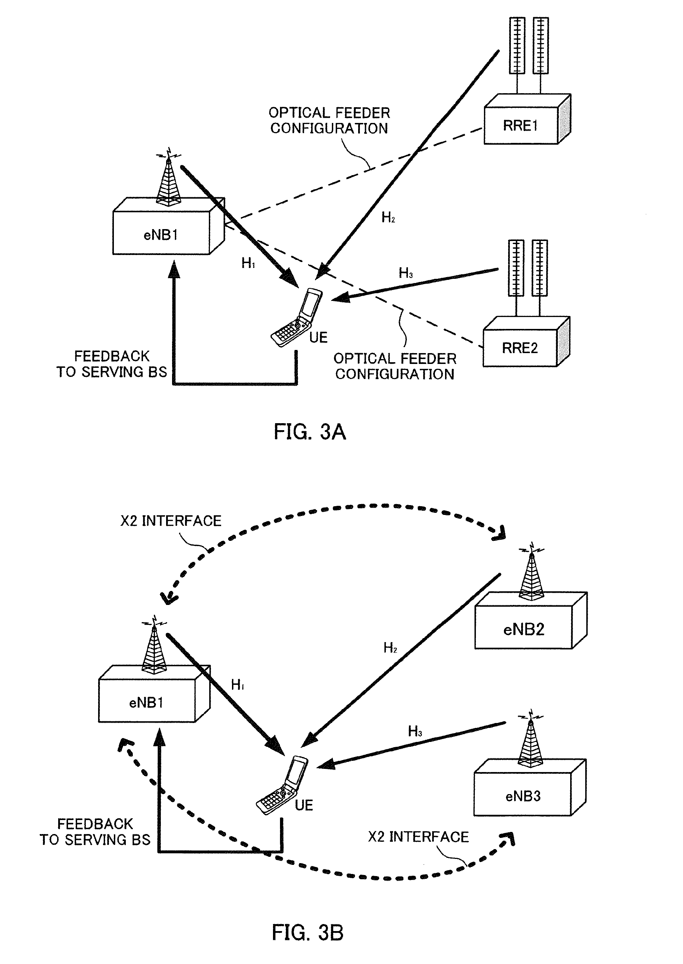

As a configuration to realize CoMP transmission, as shown in FIG. 3A, there is a configuration (centralized control based on a remote radio equipment configuration) to include a radio base station apparatus (radio base station apparatus eNB) and a plurality of remote radio equipment (RREs) that are connected with the radio base station apparatus eNB by an optical feeder configuration (optical fiber). Besides, there is a configuration of a radio base station apparatus (radio base station apparatus eNB) (autonomous distributed control based on an independent base station configuration), as shown in FIG. 3B.

In the configuration shown in FIG. 3A (RRE configuration), remote radio equipment RRE 1 and RRE 2 are controlled in a centralized fashion in a radio base station apparatus eNB. In the RRE configuration, the radio base station apparatus eNB (central base station) that performs baseband signal processing and control for a plurality of RREs, and each cell -- that is, each RRE -- are connected by baseband signals using optical fiber, so that it is possible to execute radio resource control between cells in the central base station altogether.

Meanwhile, in the configuration shown in FIG. 3B, a plurality of radio base station apparatus eNBs (or RREs) each perform radio resource allocation control such as scheduling. In this case, by using the X2 interfaces between the radio base station apparatuses eNB 1 to eNB 3, radio resource allocation information such as timing information and scheduling is transmitted to one radio base station apparatus in accordance with need, thereby coordinating between the cells.

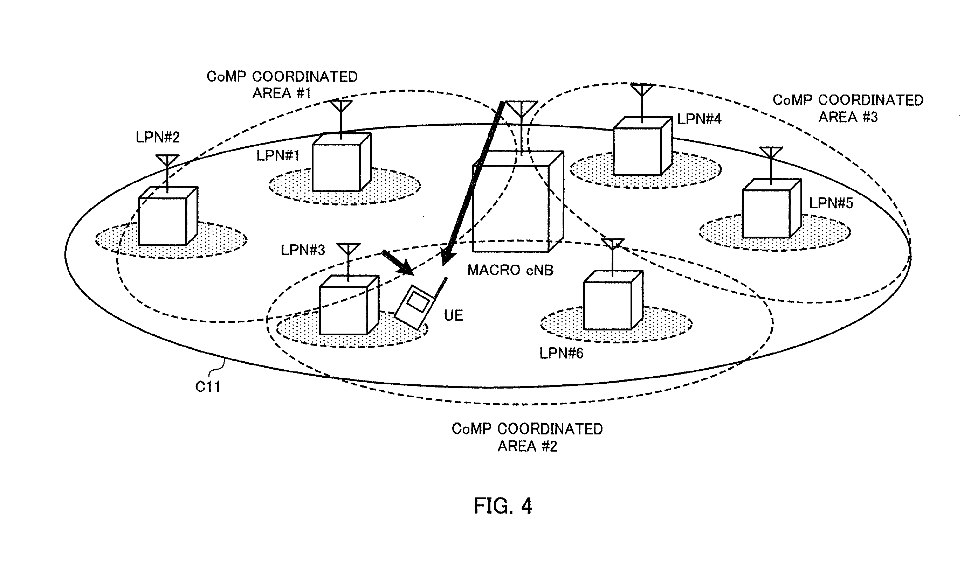

Assuming a case where, in a heterogeneous network like this, a radio base station apparatus of a relatively large cell radius (for example, a macro base station) and a radio base station apparatus of a relatively small cell radius (for example, a pico base station) perform CoMP transmission, it is preferable to use a centralized control-type RRE configuration that is suitable for dynamic control between radio base station apparatuses (FIG. 3A). FIG. 4 is a diagram showing a case where CoMP transmission is performed in the RRE configuration in a heterogeneous network. In this configuration, as shown in FIG. 4, a plurality of CoMP coordinated areas (coordinated areas), which are each formed with a radio base station apparatus of a relatively large cell radius (for example, a macro base station) and radio base station apparatuses that perform CoMP transmission (radio base station apparatuses of a relatively small cell radius), exist in the cell of the radio base station apparatus of a relatively large cell radius. Here, a radio base station apparatus of a relatively small cell radius is referred to as a "low power node" (LPN).

In FIG. 4, there are three CoMP coordinated areas in macro cell C11. CoMP coordinated area #1 is formed with the macro base station, LPN #1 and LPN #2, CoMP coordinated area #2 is formed with the macro base station, LPN #3 and LPN #6, and CoMP coordinated area #3 is formed with the macro base station, LPN #4 and LPN #5. Also, the macro base station eNB is connected with each of LPN #1 to LPN #6 via optical fiber, and the macro base station eNB controls LPN #1 to LPN #6 in a centralized fashion.

Conventional CoMP transmission control is performed taking into account the coordinated areas alone, and whether CoMP is adopted or not adopted is determined inside the coordinated areas. Consequently, the influence of interference against the outside of the coordinated areas is not taken into account. By this means, a user terminal that is located on the edge of a coordinated area may suffer deteriorated throughput performance due to the influence of interference from outside the coordinated area where the subject apparatus belongs. In the heterogeneous network environment, in particular, the influence of performance deterioration due to interference from the macro base station of high transmission power increases.

Meanwhile, when CRE is adopted in the heterogeneous network shown in FIG. 1, the user terminal that has made a handoff to the pico cell is in an environment where the user terminal originally can connect with the macro cell readily, and therefore receives severe interference from the macro cell. So, interference coordination (eICIC: enhanced Inter-Cell Interference Control) between the cells is employed. Inter-cell interference coordination includes interference coordination in the time domain and interference coordination in the frequency domain.

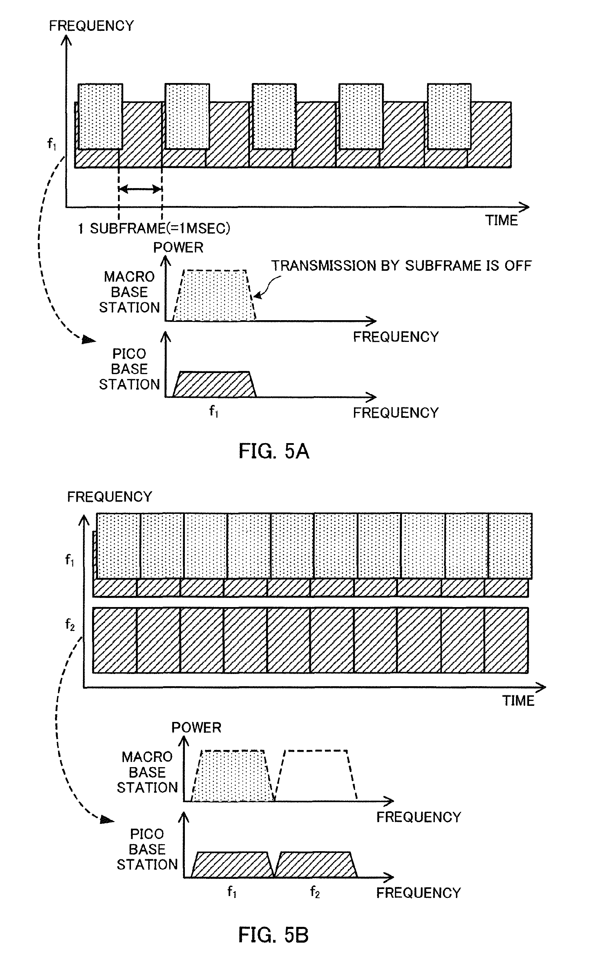

In interference coordination in the time domain, as shown in FIG. 5A, radio resource blocks in the time domain, which the macro base station can transmit in the time domain, are defined based on the pattern of almost-blank subframes (ABSs). In the example shown in FIG. 5A, every time the macro base station transmits a signal (1 subframe (1 ms)), then the macro base station assumes non-transmission (zero-power transmission), on a per subframe basis.

In interference coordination in the frequency domain, as shown in FIG. 5B, radio resource blocks in the frequency domain, which are allocated to the pico base station 200A alone, are defined. To be more specific, although frequency band f1 is allocated to the macro base station and the pico base station, frequency band f2 is allocated to the pico base stations alone.

The present inventors have found out that, by adopting semi-static inter-cell coordination when CoMP transmission is adopted in a heterogeneous network, it is possible to execute a dynamic control of CoMP transmission in coordinated areas, and also improve throughput, and arrived at the present invention.

That is to say, a gist of the present invention is that a user terminal measures the first reception quality in a first transmission period when a radio base station apparatus of a large cell performs no transmission or reduces transmission power, and second reception quality in a second transmission period when this radio base station apparatus and low power nodes perform transmission, and transmits an uplink signal including the first reception quality and the second reception quality, to the radio base station apparatus, and the radio base station apparatus receives the uplink signal including the first reception quality and the second reception quality, and, when performing coordinated multiple-point transmission, allocating radio resources for a user terminal that is located on an edge of a coordinated area in the first transmission period, based on the first reception quality and the second reception quality, so that, when CoMP transmission is adopted in a heterogeneous network, it is possible to reduce the influence of performance deterioration due to interference, and improve throughput.

In the radio communication system of the present invention, a radio base station apparatus allocates radio resources to user terminals in the following manner. That is to say, a macro base station provides radio resources (transmission periods), in which transmission is suspended (or in which transmission power is reduced), and allocates the radio resources to user terminals that are located on the edges of coordinated areas. Also, the macro base station allocates radio resources (transmission periods), in which transmission is not suspended (or in which transmission power is not reduced), to user terminals that are located apart from the edges of coordinated areas.

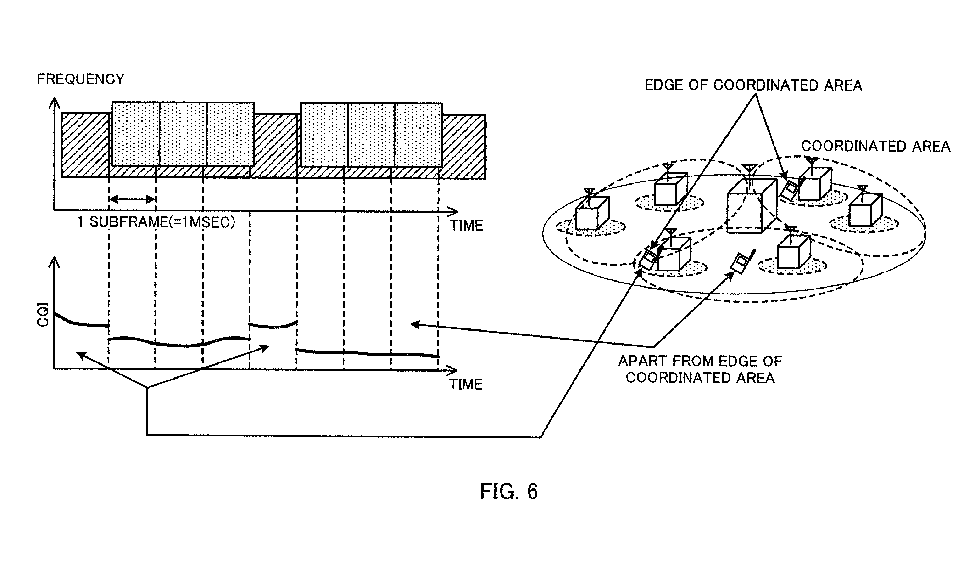

To be more specific, CoMP transmission control in this heterogeneous network will be described using FIG. 6. The macro base station provides radio resources to suspend transmission (or reduce transmission power). These radio resources can be determined based on various parameters, as will be described later. In FIG. 6, radio resources to suspend transmission (or reduce transmission power) are provided every four subframes. By this means, in one subframe (transmission-suspended subframe), there is no transmission from the macro base station (zero power transmission) or the transmission power is reduced, and, in the other three subframes, transmission is performed from the macro base station and low power nodes. In transmission-suspended subframes, there is no transmission from the macro base station or the transmission power is reduced, so that it is possible to reduce the influence of performance deterioration due to interference from the macro base station upon user terminals.

Consequently, as shown in FIG. 6, the macro base station allocates user terminals located on the edges of coordinated areas (user terminals located on the edges of coordinated areas, under low power nodes) to transmission-suspended subframes (radio resources), and allocates user terminals located apart from the edges of coordinated areas to subframes (radio resources) apart from transmission-suspended subframes. In this way, the macro base station allocates user terminals located on the edges of coordinated areas to transmission-suspended subframes, so that it is possible to reduce the deterioration of performance in user terminals that are located on the edges of coordinated areas and that are influenced relatively severely by interference from the macro base station. As a result of this, it is possible to improve the throughput in the whole system. According to this control, it is possible to apply semi-static interference coordination between a plurality of CoMP coordinated areas, and also apply dynamic CoMP transmission inside the coordinated areas.

When the above-described control is executed, a user terminal that is located on the edge of a coordinated area under a low power node feeds back both reception quality information of the radio resources (transmission-suspended subframes) in which the macro base station suspends transmission or reduces the transmission power, and reception quality information of the radio resources in which the macro base station does not suspend transmission or reduce the transmission power (subframes apart from the transmission-suspended subframes: subframes which the macro base station and the low power nodes transmit), to the macro base station.

To be more specific, a user terminal feeds back (1) reception quality information for transmission-suspended subframes when CoMP is applied, (2) reception quality information for transmission-suspended subframes when CoMP is not applied, (3) reception quality information for subframes apart from transmission-suspended subframes when CoMP is applied, and (4) reception quality information for subframes apart from transmission-suspended subframes when CoMP is not applied, to the macro base station.

Note that whether or not to measure the reception quality (channel state information) of radio resources of above (1) to (4) is reported from the radio base station apparatus to the user terminal. This reporting can be made by a method complying with CSI measurement restrictions. For reception quality, for example, CQI (Channel Quality Indicator), RSRP (Reference Signal Received Power), RSRQ (Reference Signal Reception quality)) and so on can be used.

Scheduling of radio resources in which the macro base station suspends transmission or reduces the transmission power (transmission-suspended subframes) (that is, in which periods transmission-suspended subframes are to be provided) can be determined based on, for example, the load factor of a low power node that is located on the edge of a coordinated areas and the load factor of a low power node that is located apart from the edge of a coordinated area. For example, radio resources in which the macro base station suspends transmission or reduces the transmission power (subframes (the number of RBs)) may be determined based on: (the load factor of a low power node located on the edge of a coordinated area) / (the load factor of a low power node located on the edge of a coordinated area) + (the load factor of a low power node located apart from the edge of a coordinated area). Note that, in the event of a full buffer model, the load factor may be determined as the number of connecting user terminals.

Alternately, scheduling of radio resources in which the macro base station suspends transmission or reduces the transmission power (transmission-suspended subframes) (that is, in which periods transmission-suspended subframes are to be provided) may be determined based on, for example, the service cell throughput of a low power node that is located on the edge of a coordinated area and the service cell throughput of a low power node that is located apart from the edge of a coordinated area. For example, radio resources in which the macro base station suspends transmission or reduces the transmission power (subframes (the number of RBs)) may be determiend based on: (the service cell throughput of a low power node located on the edge of a coordinated area) / (the service cell throughput of a low power node located on the edge of a coordinated area) + (the service cell throughput of a low power node located apart from the edge of a coordinated area).

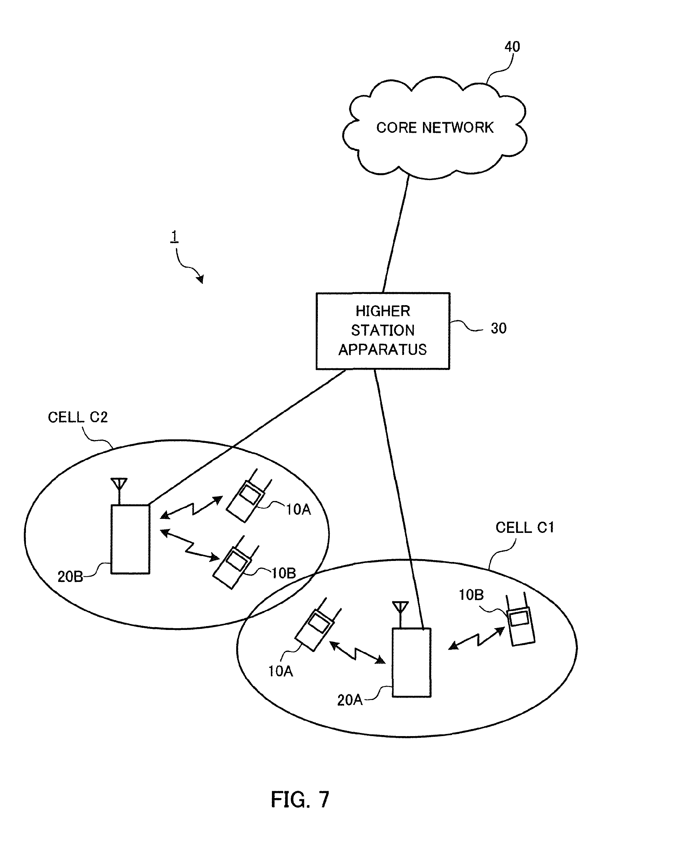

Now, a radio communication system according to an embodiment of the present invention will be described below in detail. FIG. 7 is a diagram to explain a system configuration of a radio communication system according to the present embodiment. Note that the radio communication system shown in FIG. 7 is a system to accommodate, for example, the LTE system or SUPER 3G. In this radio communication system, carrier aggregation, which groups a plurality of fundamental frequency blocks into one, where the system band of the LTE system is one unit, is used. Also, this radio communication system may be referred to as "IMT-Advanced" or may be referred to as "4G."

As shown in FIG. 7, a radio communication system 1 is configured to include radio base station apparatuses 20A and 20B, and a plurality of first and second user terminals 10A and 10B that communicate with these radio base station apparatuses 20A and 20B. The radio base station apparatuses 20A and 20B are connected with a higher station apparatus 30, and this higher station apparatus 30 is connected with a core network 40. Also, the radio base station apparatuses 20A and 20B are connected with each other by wire connection or by wireless connection. The first and second user terminals 10A and 10B are able to communicate with the radio base station apparatuses 20A and 20B in cells C1 and C2. Note that the higher station apparatus 30 includes, for example, an access gateway apparatus, a radio network controller (RNC), a mobility management entity (MME) and so on, but is by no means limited to these. Note that cells C1 and C2 each employ a heterogeneous network configuration like cell C11 shown in FIG. 4, the macro base station eNB controls low power nodes LPN in a centralized fashion, and a plurality of CoMP coordinated areas are formed in macro cell C11. Consequently, when CoMP transmission is adopted, CoMP transmission control is executed dynamically in each CoMP coordinated area.

Although the first and second user terminals 10A and 10B may be either LTE terminals or LTE-A terminals, the following description will be given simply with respect to the first and second user terminals, unless specified otherwise. Also, although the first and second user terminals 10A and 10B will be described to perform radio communication with the radio base station apparatuses 20A and 20B for ease of explanation, more generally, user apparatuses (UE), including user terminals and fixed terminal apparatuses, may be used as well.

For radio access schemes, in the radio communication system 1, OFDMA (Orthogonal Frequency Division Multiple Access) is adopted on the downlink, and SC-FDMA (Single-Carrier Frequency Division Multiple Access) is adopted on the uplink, but the uplink radio access scheme is by no means limited to this. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one or continuous resource blocks, and allowing a plurality of terminals to use mutually different bands.

Downlink communication channels include a PDSCH (Physical Downlink Shared CHannel), which is used by the first and second user terminals 10A and 10B on a shared basis as a downlink data channel, and downlink L1/L2 control channels (PDCCH, PCFICH, PHICH). Transmission data and higher control information are transmitted by the PDSCH. Scheduling information for the PDSCH and the PUSCH and so on are transmitted by the PDCCH (Physical Downlink Control Channel). The number of OFDM symbols to use for the PDCCH is transmitted by the PCFICH (Physical Control Format Indicator Channel). HARQ ACK and NACK for the PUSCH are transmitted by the PHICH (Physical Hybrid-ARQ Indicator Channel).

Uplink communication channels include a PUSCH (Physical Uplink Shared Channel), which is used by each user terminal on a shared basis as an uplink data channel, and a PUCCH (Physical Uplink Control Channel), which is an uplink control channel. By means of this PUSCH, transmission data and higher control information are transmitted. Furthermore, the PUCCH transmits downlink reception quality information (CQI), ACK/NACK, and so on.

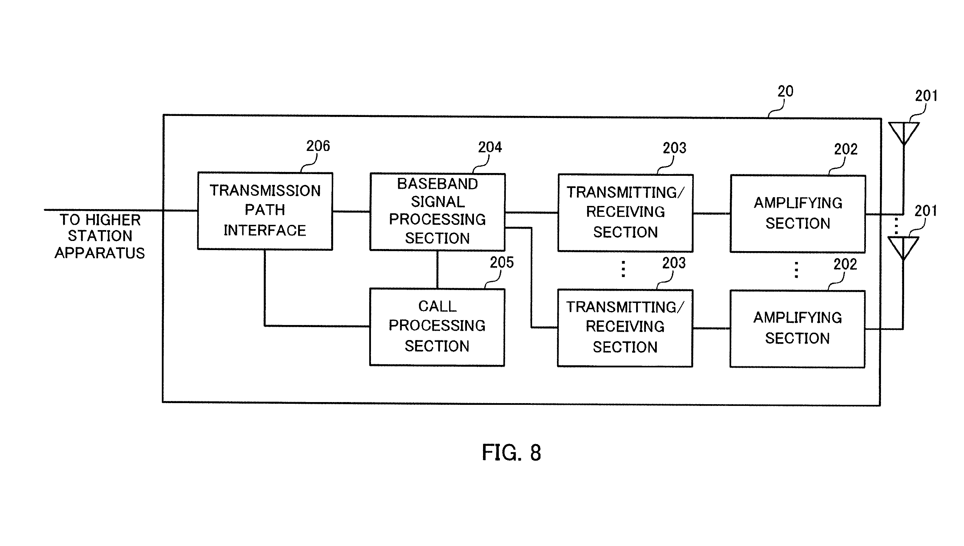

Now, referring to FIG. 8, an overall configuration of a radio base station apparatus according to the present embodiment will be explained. Note that the radio base station apparatuses 20A and 20B have the same configuration and therefore hereinafter will be described simply as "radio base station apparatus 20." Also, the first and second user terminals 10A and 10B have the same configuration and therefore hereinafter will be described simply as "user terminal 10." The radio base station apparatus 20 includes transmitting/receiving antennas 201, amplifying sections 202, transmitting/receiving sections (reporting sections) 203, a baseband signal processing section 204, a call processing section 205, and a transmission path interface 206. Transmission data to be transmitted from the radio base station apparatus 20 to the user terminal on the downlink is input from the higher station apparatus 30, into the baseband signal processing section 204, via the transmission path interface 206.

In the baseband signal processing section 204, the downlink data channel signal is subjected to, for example, a PDCP layer process, division and coupling of transmission data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process, and a precoding process. Furthermore, as for the signal of the physical downlink control channel, which is a downlink control channel, transmission processes such as channel coding and an inverse fast Fourier transform are performed.

Also, the baseband signal processing section 204 reports control information for allowing each user terminal 10 to perform radio communication with the radio base station apparatus 20, to the user terminals 10 connected to the same cell, by a broadcast channel. The information for allowing communication in the cell includes, for example, the uplink or downlink system bandwidth, identification information of a root sequence (root sequence index) for generating random access preamble signals in the PRACH (Physical Random Access Channel), and so on.

Baseband signals that are output from the baseband signal processing section 204 are converted into a radio frequency band in the transmitting/receiving sections 203. The amplifying sections 202 amplify the radio frequency signals having been subjected to frequency conversion, and output the results to the transmitting/receiving antennas 201. Note that the transmitting/receiving sections 203 constitute a receiving means to receive uplink signals including information about phase differences between a plurality of cells and PMIs, and also constitute a transmitting means to transmit transmission signals by coordinated multiple point transmission.

Meanwhile, as for signals to be transmitted from the user terminal 10 to the radio base station apparatus 20 on the uplink, radio frequency signals received in the transmitting/receiving antennas 201 are amplified in the amplifying sections 202, converted into baseband signals by frequency conversion in the transmitting/receiving sections 203, and input in the baseband signal processing section 204.

The baseband signal processing section 204 performs an FFT process, an IDFT process, error correction decoding, a MAC retransmission control receiving process, and RLC layer and PDCP layer receiving processes, of the transmission data that is included in the baseband signals received on the uplink. The decoded signals are transferred to the higher station apparatus 30 through the transmission path interface 206.

The call processing section 205 performs call processing such as setting up and releasing communication channels, manages the state of the radio base station apparatus 20 and manages the radio resources.

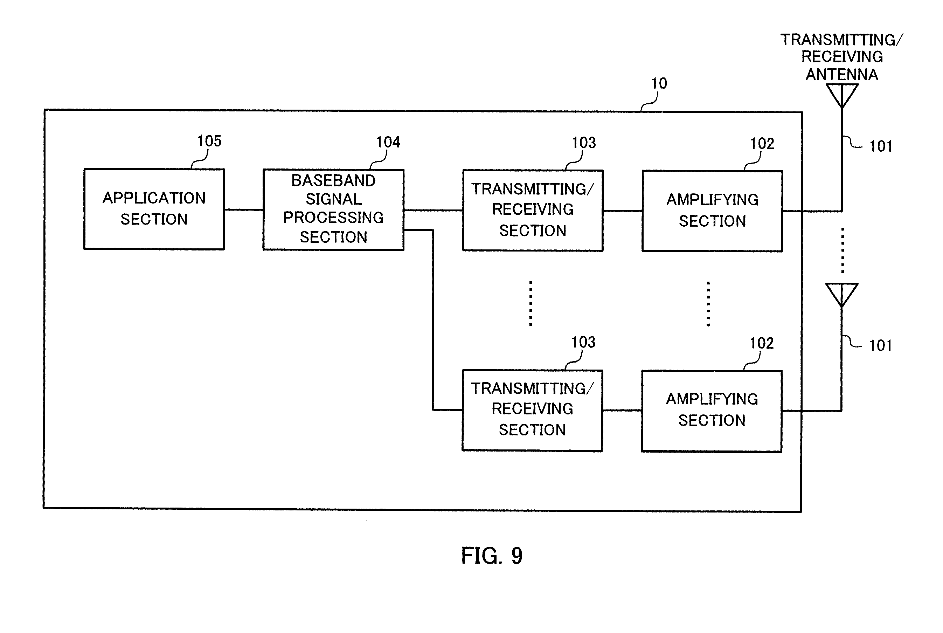

Next, referring to FIG. 9, an overall configuration of a user terminal according to the present embodiment will be described. An LTE terminal and an LTE-A terminal have the same hardware configurations in principle parts, and therefore will be described indiscriminately. A user terminal 10 has transmitting/receiving antennas 101, amplifying sections 102, transmitting/receiving sections (receiving sections) 103, a baseband signal processing section 104, and an application section 105.

As for downlink data, radio frequency signals that are received in the transmitting/receiving antennas 101 are amplified in the amplifying sections 102, and subjected to frequency conversion and converted into baseband signals in the transmitting/receiving sections 103. The baseband signals are subjected to an FFT process, error correction decoding, a retransmission control receiving process and so on in the baseband signal processing section 104. In this downlink data, downlink transmission data is transferred to the application section 105. The application section 105 performs processes related to higher layers above the physical layer and the MAC layer. Also, in the downlink data, the broadcast information is also transferred to the application section 105.

Meanwhile, uplink transmission data is input from the application section 105 into the baseband signal processing section 104. The baseband signal processing section 104 performs a mapping process, a retransmission control (HARQ) transmission process, channel coding, a DFT process, and an IFFT process. The baseband signals that are output from the baseband signal processing section 104 is converted into a radio frequency band in the transmitting/receiving sections 103. After that, the amplifying sections 102 amplify the radio frequency signals having been subjected to frequency conversion, and transmit the results from the transmitting/receiving antennas 101. Note that the transmitting/receiving sections 103 constitute a transmitting means to transmit information about phase differences, information about the connecting cells, the selected PMIs and so on, to the radio base station apparatuses eNB of a plurality of cells, and also constitute a receiving means to receive downlink signals.

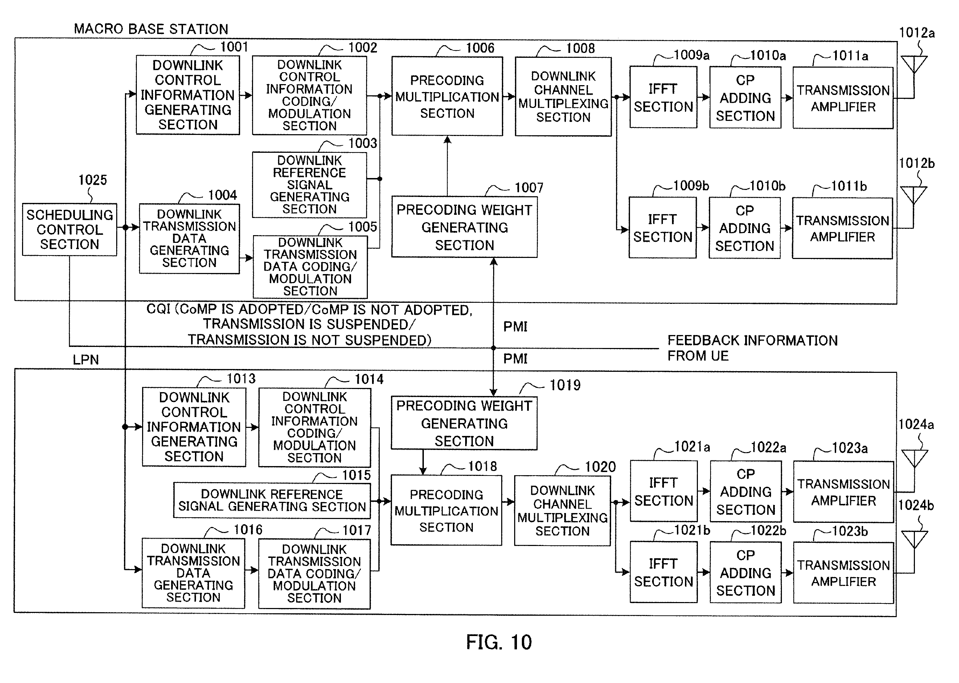

The function blocks of a radio base station apparatus will be described with reference to FIG. 10. The radio base station apparatus shown in FIG. 10 has a centralized control-type radio base station configuration. In the event of centralized control, a given radio base station apparatus eNB (central radio base station apparatus eNB, which is the macro base station in FIG. 10) executes radio resource allocation control such as scheduling, altogether, and a LPN follows the radio resource allocation result by the central radio base station apparatus eNB.

Note that the function blocks of FIG. 10 are primarily the processing content of the baseband processing section. Also, the functional block diagram of FIG. 10 is simplified, and is assumed to have configurations which a baseband processing section should normally have.

The transmission section on the central radio base station apparatus eNB (macro base station) side has a downlink control information generating section 1001, a downlink control information coding/modulation section 1002, a downlink reference signal generating section 1003, a downlink transmission data generating section 1004, a downlink transmission data coding/modulation section 1005, a precoding multiplication section 1006, a precoding weight generating section 1007, a downlink channel multiplexing section 1008, IFFT sections 1009a and 1009b, CP adding sections 1010a and 1010b, transmission amplifiers 1011a and 1011b, transmitting antennas 1012a and 1012b, and a scheduling control section 1025.

On the other hand, the transmission section on the LPN side has a downlink control information generating section 1013, a downlink control information coding/modulation section 1014, a downlink reference signal generating section 1015, a downlink transmission data generating section 1016, a downlink transmission data coding/modulation section 1017, a precoding multiplication section 1018, a precoding weight generating section 1019, a downlink channel multiplexing section 1020, IFFT sections 1021a and 1021b, CP adding sections 1022a and 1022b, transmission amplifiers 1023a and 1023b, and transmitting antennas 1024a and 1024b. The macro base station eNB and LPN are connected via optical fiber.

The downlink control information generating sections 1001 and 1013 each generate downlink control information and output that downlink control information to the downlink control information coding/modulation sections 1002 and 1014, respectively. The downlink control information coding/modulation sections 1002 and 1014 each perform channel coding and data modulation for the downlink control information, and output the result to the precoding multiplication sections 1006 and 1018, respectively.

The downlink reference signal generating sections 1003 and 1015 each generate downlink reference signals (CRS (Common Reference Signal), CSI-RS (Channel State Information Reference Signal), DM-RS (Demodulation-Reference Signal)), and output these downlink reference signals to the precoding multiplication sections 1006 and 1018, respectively.

The downlink transmission data generating sections 1004 and 1016 each generate downlink transmission data, and output this downlink transmission data to the downlink transmission data coding/modulation sections 1005 and 1017, respectively. The downlink transmission data coding/modulation sections 1005 and 1017 each perform channel coding and data modulation for the downlink transmission data, and output the results to the precoding multiplication sections 1006 and 1018, respectively.

The downlink control information generating sections 1001 and 1013 each generate downlink control information by control by the scheduling control section 1025, respectively. At this time, the scheduling control section 1025 performs scheduling control of the downlink control information using the CQI and inter-cell phase difference information from the user terminal UE. That is, the scheduling control section 1025 adjusts the phase differences between cells using the inter-cell phase difference information, and performs scheduling control for the downlink control information such that CoMP transmission is made possible in the macro base station and LPN (that is, to allow CoMP transmission with the radio base station apparatus eNBs of other cells).

As described above, the downlink transmission data generating sections 1004 and 1016 each generate downlink transmission data by control by the scheduling control section 1025. At this time, the scheduling control section 1025 performs scheduling control of the downlink transmission data using the CQI and inter-cell phase difference information from the user terminal UE. That is, the scheduling control section 1025 adjusts the phase differences between cells using the inter-cell phase difference information, and performs scheduling control for the downlink transmission data such that CoMP transmission is made possible in the macro base station and LPN (that is, to allow CoMP transmission with the radio base station apparatus eNBs of other cells).

The macro base station receives (1) reception quality information (here, CQI) for transmission-suspended subframes when CoMP is adopted, (2) reception quality information (here, CQI) for transmission-suspended subframes when CoMP is not adopted, (3) reception quality information (here, CQI) for subframes apart from transmission-suspended subframes when CoMP is adopted, and (4) reception quality information (here, CQI) for subframes apart from transmission-suspended subframes when CoMP is not adopted, which are fed back from the user terminal.

The scheduling control section 1025 may identify between a user terminal that is located on the edge of a coordinated area and a user terminal that is located apart from the edge of a coordinated area, based on these pieces of reception quality information. For example, it is possible to compare the reception quality information of (1) and the reception quality information of (3) above, or compare the reception quality information of (2) and the reception quality information of (4), and determine a user terminal showing a relatively large difference between the two to be a user terminal located on the edge of a coordinated area, and determine a user terminal showing a relatively small difference between the two to be a user terminal located on the edge of a coordinated area. Note that, in this determination, a threshold value may be provided for the difference between the two, and threshold judgment may be made. Also, in this determination, it may be possible to identify between a user terminal that is located on the edge of a coordinated area and a user terminal that is located apart from the edge of a coordinated area, based on the position information of each user terminal or based on the position information of the LPN which each user terminal connects with.

After identifying between a user terminal located on the edge of a coordinated area and a user terminal located apart from the edge of a coordinated area, the scheduling control section 1025 allocates the user terminal located on the edge of a coordinated area to transmission-suspended subframes (radio resources), and allocates the user terminal located apart from the edge of a coordinated area to subframes (radio resources) apart from transmission-suspended subframes.

The precoding weight generating sections 1007 and 1019 generate precoding weights, using a codebook, based on the PMIs fed back from the user terminals UE. The precoding weight generating sections 1007 and 1019 output the precoding weights to the precoding weight multiplication sections 1006 and 1018, respectively.

The precoding weight generating sections 1007 and 1019 each have a codebook and select precoding weights corresponding to the PMIs from the codebook.

The precoding multiplication sections 1006 and 1018 multiply transmission signals by precoding weights corresponding to the PMIs. That is to say, based on the precoding weights given from the precoding weight generating sections 1007 and 1019, the precoding multiplication sections 1006 and 1018 apply a phase shift and/or amplitude shift to the transmission signals (downlink control information, downlink reference signals and downlink transmission data) for each of transmitting antennas 1012a and 1012b and transmitting antennas 1024a and 1024b (weighting of transmitting antennas by precoding). The precoding multiplication sections 1006 and 1018 output the transmission signals, to which a phase shift and/or an amplitude shift has been applied, to the downlink channel multiplexing sections 1008 and 1020, respectively.

The downlink channel multiplexing sections 1008 and 1020 combine the downlink control information, the downlink reference signals, and the downlink transmission data having been subjected to a phase shift and/or an amplitude shift, and generate transmission signals for each of the transmitting antennas 1012a and 1012b and the transmitting antennas 1024a and 1024b. The downlink channel multiplexing sections 1008 and 1020 output the transmission signals to the IFFT (Inverse Fast Fourier Transform) sections 1009a and 1009b and IFFT sections 1021a and 1021b.

The IFFT sections 1009a and 1009b and the IFFT sections 1021a and 1021 b perform an IFFT on the transmission signals, and output the transmission signals after the IFFT to CP adding sections 1010a and 1010b and CP adding sections 1022a and 1022b. The CP adding sections 1010a and 1010b and CP adding sections 1022a and 1022b add CPs (Cyclic Prefixes) to the transmission signals after the IFFT, and output the transmission signals, to which CPs have been added, to the transmission amplifiers 1011a and 1011b and the transmission amplifiers 1023a and 1023b.

The transmission amplifiers 1011a and 1011b and transmission amplifiers 1023a and 1023b amplify the transmission signals to which CPs have been added. The transmission signals after the amplification are transmitted from the transmitting antennas 1012a and 1012b and the transmitting antennas 1024a and 1024b, to the user terminals UE, on the downlink.

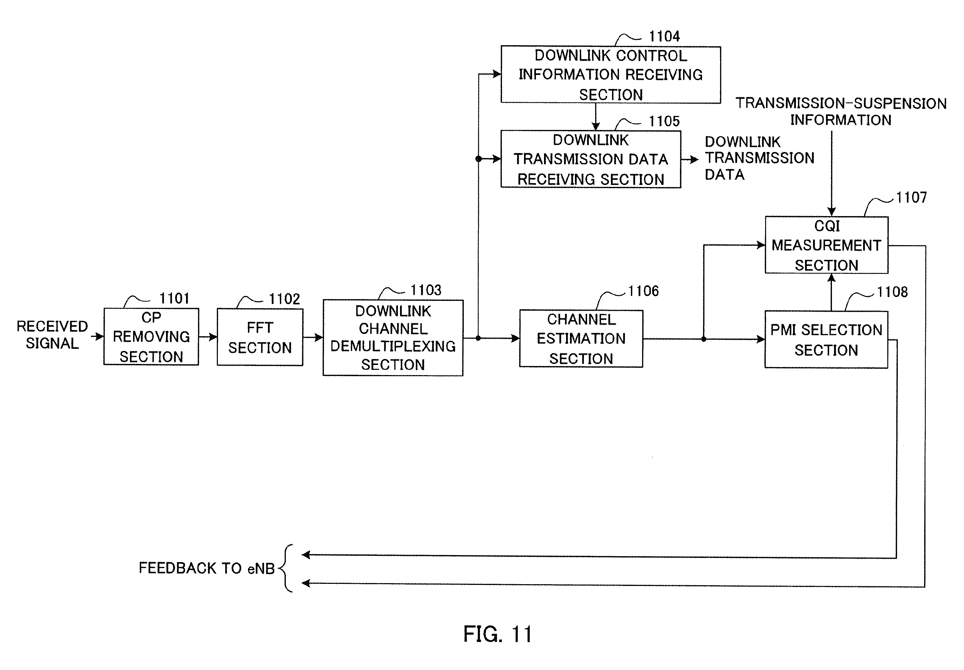

Next, the function blocks of a user terminal will be described with reference to FIG. 11. Note that the function blocks of FIG. 11 are primarily the processing content of the baseband processing section. Also, the function blocks shown in FIG. 11 are simplified to explain the present invention, and assumed to have the configurations which a baseband processing section should normally have.

The receiving section of a user terminal UE has a CP removing section 1101, an FFT section 1102, a downlink channel demultiplexing section 1103, a downlink control information receiving section 1104, a downlink transmission data receiving section 1105, a channel estimation section 1106, a CQI measurement section 1107, and a PMI selection section 1108.

A transmission signal that is transmitted from the macro base station eNB or LPN is received by an antenna and is output to the CP removing section 1101. The CP removing section 1101 removes the CPs from the received signal and outputs the signal to the FFT (Fast Fourier Transform) 1102. The FFT section 1102 performs a Fourier transform of the signal from which the CPs have been removed, and converts this signal from a time sequence signal to a frequency domain signal. The FFT section 1102 outputs the signal having been converted into a frequency domain signal, to the downlink channel demultiplexing section 1103. The downlink channel demultiplexing section 1103 separates the downlink channel signal into downlink control information, downlink transmission data, and downlink reference signals. The downlink channel demultiplexing section 1103 outputs the downlink control information to the downlink control information receiving section 1104, the downlink transmission data to the downlink transmission data receiving section 1105, and the downlink reference signals to the channel estimation section 1106.

The downlink control information receiving section 1104 demodulates the downlink control information, and outputs the demodulated control information to the downlink transmission data receiving section 1105. The downlink transmission data receiving section 1105 demodulates the downlink transmission data using the control information.

The channel estimation section 1106 estimates the channel state using the reference signals included in the downlink signal, and outputs the estimated channel state to the CQI measurement section 1107 and the PMI selection section 1108. When reference signals are transmitted from a plurality of cells, downlink channel states are estimated using the reference signals included in downlink signals from the plurality of cells.

The PMI selection section 1108 calculates an optimal value of the combination of the PMI and inter-cell phase difference information of each cell, from the channel states of the plurality of cells, and determines each cell's PMI and inter-cell phase difference information. The determined PMIs and inter-cell phase difference information are output to the CQI measurement section 1107, and also reported to the macro base station eNB as feedback information.

To be more specific, the PMI selection section 1108 is able to determine the PMI and inter-cell phase difference information of each cell, from the channel states acquired in the channel estimation section 1106.

The CQI measurement section 1107 measures CQIs using the channel states reported from the channel estimation section 1106, and each cell's PMI and inter-cell phase difference information reported from the PMI selection section 1108. The CQIs include (1) the CQI of transmission-suspended subframes when CoMP is adopted, (2) the CQI of transmission-suspended subframes when CoMP is not adopted, (3) the CQI of subframes apart from transmission-suspended subframes when CoMP is adopted, and (4) the CQI of subframes apart from transmission-suspended subframes when CoMP is not adopted. The four types of CQIs that are measured are reported to the macro base station eNB as feedback information.

To be more specific, the CQI measurement section 1107 is able to determine each cell's PMI and inter-cell phase difference information, from the information reported from the channel estimation section 1106 and the PMI selection section 1108.

In the radio communication system of the above configuration, first, the channel estimation section 1106 of the user terminal UE estimates a plurality of channel states using the reference signals included in downlink signals from a plurality of cells. Next, the PMI selection section 1108 calculates an optimal value of the combination of a PMI and inter-cell phase difference information for each cell, from the channel states estimated in the channel estimation section 1106, and determines the PMI and inter-cell phase difference information of each cell. Next, the CQI measurement section 1107 measures channel quality from the channel states estimated in the channel estimation section 1106, and the PMIs and inter-cell phase difference information determined in the PMI selection section 1108. At this time, the CQI measurement section 1107 measures four types of CQIs, namely (1) the CQI of transmission-suspended subframes when CoMP is adopted, (2) the CQI of transmission-suspended subframes when CoMP is not adopted, (3) the CQI of subframes apart from transmission-suspended subframes when CoMP is adopted, and (4) the CQI of subframes apart from transmission-suspended subframes when CoMP is not adopted. The user terminal UE feeds back each cell's PMI and inter-cell phase difference information acquired in the PMI selection section 1108, and the four types of CQIs acquired in the CQI measurement section 1107, to the macro base station.

Also, the macro base station receives uplink signals including the four types of CQIs. Next, the precoding multiplication sections 1006 and 1018 multiply transmission signals by precoding weights corresponding to the PMIs. Next, after identifying between a user terminal located on the edge of a coordinated area and a user terminal located apart from the edge of a coordinated area based on the four types of CQIs fed back from the user terminals UE, the scheduling control section 1025 allocates the user terminal located on the edge of a coordinated area to transmission-suspended subframes, and allocates the user terminal located apart from the edge of a coordinated area to subframes apart from transmission-suspended subframes. By this means, it is possible to reduce the influence of interference from the macro base station against user terminals located on the edges of coordinated areas, so that it is possible to reduce the influence of performance deterioration due to interference when CoMP transmission is adopted in a heterogeneous network, and improve throughput.

Now, although the present invention has been described in detail with reference to the above embodiments, it should be obvious to a person skilled in the art that the present invention is by no means limited to the embodiments described herein. The present invention can be implemented with various corrections and in various modifications, without departing from the spirit and scope of the present invention defined by the recitations of the claims. Consequently, the descriptions herein are provided only for the purpose of explaining examples, and should by no means be construed to limit the present invention in any way.

The disclosure of Japanese Patent Application No. 2011-177607, filed on August 15, 2011, including the specification, drawings and abstract, is incorporated herein by reference in its entirety.

## Claims

1. A radio communication system where, in a network in which a first cell having a predetermined cell radius and a second cell having a smaller cell radius than the cell radius of the first cell are overlaid, a plurality of coordinated areas, in which a first radio base station apparatus of the first cell and a second radio base station apparatus of the second cell perform coordinated multiple-point transmission, exist in the first cell, the radio communication system comprising:
a user terminal comprising:
a measurement section that measures first reception quality in a first transmission period when the first radio base station apparatus performs no transmission or reduces transmission power, and second reception quality in a second transmission period when the first radio base station apparatus and the second radio base station apparatus perform transmission; and
a transmission section that transmits an uplink signal including the first reception quality and the second reception quality, to the first radio base station apparatus; and
a radio base station apparatus comprising:
a receiving section that receives the uplink signal including the first reception quality and the second reception quality; and
an allocation section that, when performing the coordinated multiple-point transmission, allocates radio resources for a user terminal that is located on an edge of a coordinated area in the first transmission period, based on the first reception quality and the second reception quality.

2. The radio communication system according to claim 1, wherein each of the first reception quality and the second reception quality includes reception quality when the coordinated multiple-point transmission is adopted and reception quality when the coordinated multiple-point transmission is not adopted.

3. The radio communication system according to claim 1, wherein the first transmission period is determined based on a load factor of a second radio base station apparatus that is located on an edge of a coordinated area and a load factor of a second radio base station apparatus that is located apart from the edge of the coordinated area.

4. The radio communication system according to claim 1, wherein the first transmission period is determined based on a service cell throughput of a second radio base station apparatus that is located on an edge of a coordinated area and a service cell throughput of a second radio base station apparatus that is located apart from the edge of the coordinated area.

5. The radio communication system according to claim 1, wherein the first radio base station apparatus is configured to control the second radio base station apparatus in a centralized manner.

6. A radio base station apparatus in a radio communication system where, in a network in which a first cell having a predetermined cell radius and a second cell having a smaller cell radius than the cell radius of the first cell are overlaid, a plurality of coordinated areas, in which a first radio base station apparatus of the first cell and a second radio base station apparatus of the second cell perform coordinated multiple-point transmission, exist in the first cell, the radio base station apparatus comprising:
a receiving section that receives an uplink signal including first reception quality in a first transmission period when the first radio base station apparatus performs no transmission or reduces transmission power, and second reception quality in a second transmission period when the first radio base station apparatus and the second radio base station apparatus perform transmission; and
an allocation section that, when performing the coordinated multiple-point transmission, allocates radio resources for a user terminal that is located on an edge of a coordinated area in the first transmission period, based on the first reception quality and the second reception quality.

7. A user terminal in a radio communication system where, in a network in which a first cell having a predetermined cell radius and a second cell having a smaller cell radius than the cell radius of the first cell are overlaid, a plurality of coordinated areas, in which a first radio base station apparatus of the first cell and a second radio base station apparatus of the second cell perform coordinated multiple-point transmission, exist in the first cell, the user terminal comprising:
a measurement section that measures first reception quality in a first transmission period when the first radio base station apparatus performs no transmission or reduces transmission power, and second reception quality in a second transmission period when the first radio base station apparatus and the second radio base station apparatus perform transmission; and
a transmission section that transmits an uplink signal including the first reception quality and the second reception quality, to the first radio base station apparatus.

8. A radio communication method in a radio communication system where, in a network in which a first cell having a predetermined cell radius and a second cell having a smaller cell radius than the cell radius of the first cell are overlaid, a plurality of coordinated areas, in which a first radio base station apparatus of the first cell and a second radio base station apparatus of the second cell perform coordinated multiple-point transmission, exist in the first cell, the radio communication method comprising the steps of:
at a user terminal:
measuring first reception quality in a first transmission period when the first radio base station apparatus performs no transmission or reduces transmission power, and second reception quality in a second transmission period when the first radio base station apparatus and the second radio base station apparatus perform transmission; and
transmitting an uplink signal including the first reception quality and the second reception quality, to the first radio base station apparatus; and
at the first radio base station apparatus:
receiving the uplink signal including the first reception quality and the second reception quality; and
when performing the coordinated multiple-point transmission, allocating radio resources for a user terminal that is located on an edge of a coordinated area in the first transmission period, based on the first reception quality and the second reception quality.
